# EUROPEAN PATENT SPECIFICATION

(11) **EP 1 689 256 B1**
(45) Date of publication and mention of the grant of the patent: **27.07.2011**
(21) Application number: 04799813.3
(22) Date of filing: 18.11.2004
(51) Int. Cl.: A23L 2/56, A23L 2/02, A23L 1/226, A23L 1/221

(54) **FOOD PRODUCTS CONTAINING A FRUIT COMPONENT**
NAHRUNGSMITTELPRODUKTE, DIE EINEN FRUCHTBESTANDTEIL ENTHALTEN
PRODUITS ALIMENTAIRES CONTENANT UN CONSTITUANT A BASE DE FRUIT

(30) Priority: 19.11.2003 JP 2003389758
(43) Date of publication of application: 16.08.2006
(73) Proprietor: Takasago International Corporation, Tokyo 144-8721 (JP)
(72) Inventor: SHIMIZU, Toru, Takasago International Corporation, Hiratsuka-shi, Kanagawa 254-0073 (JP); SHIGETA, Yoshinari, Takasago International Corp., Hiratsuka-shi, Kanagawa 254-0073 (JP); KUNIEDA, Satomi, Takasago International Corp., Hiratsuka-shi, Kanagawa 254-0073 (JP)
(74) Representative: Neidl-Stippler, Cornelia
(86) International application number: PCT/JP2004/017524
(87) International publication number: WO 2005/048743

(56) References cited:
- EP-A- 0 695 509
- EP-A- 1 122 233
- EP-A- 1 215 258
- WO-A-98/06436
- WO-A-03/074622
- DATABASE WPI Section Ch, Week 200256 Derwent Publications Ltd., London, GB; Class D13, AN 2002-522982 XP002318696 & JP 2002 119264 A (YAKULT HONSHA KK) 23 April 2002 (2002-04-23) cited in the application

## Description

### Technical Field

This invention relates to the use of components (a) and (b) in a fruit juice-containing beverage according to the preamble of claim 1, which has no heavy sweetness caused by the base having sweetness, supplies a light feeling both at taking and after taking and has high acceptability in taste.

### Background Art

As the product of fruit juice-containing food products, there are known various products including fruit beverage, for example, soft drinks and alcohol drinks, fruit confectionary products, for example, a candy, a chewing gum and a chocolate, and fruit dairy products, for example, a milk product, a dairy drink, a yogurt, a sherbet and an ice cream. They are on the market widely. In these fruit juice-containing food products, the addition of bases is widely conducted such as sorbitol, glycerin, propylene glycol, saccharin sodium salt, aspartame, xylose, maltose, glucose, sucrose, maltitol, erythritol, xylitol, sucralose, glycyrrhizin, dipotassium glycyrrhizate, stevia, fructooligosaccharide, and a licorice extract to improve a storage stability, a keep-moisture property, a taste and so on. All of these bases have sweetness, but when these are added to a fruit juice-containing food product, there occurs a problem that the fruit juice-containing food product with high acceptability in taste can not be obtained because a heavy sweetness caused by the sweetness of the bases remains and a right feeling is not obtained both at taking and after taking. Addition of a flavor is carried out to solve the problem (refer to Patent Literature No. below). This addition of the flavor leads to an improvement and betterments but by this addition it is not possible to get a body feeling such as a right feeling being given in the mouth and to the throat,
Patent Literature No.1: Japanese Patent Application Laid-Open No. 2003-144086 (JP-A 2003-144086)

On the other hand, as substances which can give refreshing feeling in the oral cavity, various substances such as menthol, camphor and so on have been known so far and combined into the various foods and luxury goods, e. g. a chewing gum and a tooth powder. There is also known a method of improving a bad aftertaste of a heavy sweetness caused by the sweetness-imparting bases when adding these refreshing feeling substances into soft drinks such as coffee drinks, tea drinks and carbonated drinks (refer to Patent Literature No. 2 below).
Patent Literature No. 2: JP-A-10-313819

However, when the substances which give refreshing feeling are added to a beverage, it is impossible to feel the refreshing feeling for a long time. And when the amount of the refreshing feeling substance added is increased, there occurs a problem that the bitter taste which menthol, camphor and so on possess in themselves stands out in case of fruit juice-containing beverages.
To solve these problems, it is also known that an organic acid ester of menthol is added together with menthol into a fruit juice-containing beverage to improve durability of refreshing feeling in the oral cavity (refer to Patent Literature No. 3 below). Still, in case where the beverage is a carbonated drink or an alcohol drink, the organic acid ester of menthol is decomposed to convert into menthol by the liquid property of the beverage. Also in case of the other drinks, when they are stored under the warming condition for long time, the organic acid esters of menthol are decomposed to convert into menthol similarly. As a result, there exists a problem that a favorable body feeling can not be obtained by the bitter taste which menthol possesses. Further in the prior literatures, there is no description that no remaining effect of heavy sweetness caused by the base having sweetness added into a fruit juice-containing food product such as a fruit juice-containing beverage is obtained by the simultaneous use of menthol and menthol esters of organic acid.
Patent Literature No. 3: JP-A 2002-119264

From WO98/06436A a pharmaceutical composition containing a cooling agent (compound b) and refreshing agent (compound a) is known which is a liuid cought/cold-composition for oral administration is known. This pharmaceutical composition contains sweeteners and may be a beverage including fruit juices.

An object of the present invention is to provide a fruit juice-containing food product having sugars/artificial sweetners or preservatives not having former problems described above, that is, without too heavy sweetness and a heavy aftertaste both at taking and after taking, a light feeling is continuously given, acceptability in taste is high, and decrease of light feeling is suppressed even though stored under warming condition for long time, against any fruit juice-containing food products containing a fruit component and a base having sweetness.

### Disclosure of the Invention

As a result of eager studies and investigations for solving the above problems, the inventors found that a fruit juice-containing food product having no remaining heavy sweetness both at taking and after taking, giving right feeling continuously, having high acceptability in taste and suppressing the decrease of the right feeling even though stored under warming condition for long time is produced by adding a refreshing feeling substance such as menthol and a cool feeling substance such as 2-diol into a fruit juice-containing food product comprising a fruit component and a base having sweetness and also found such effects are not influenced by the type of the fruit juice-containing food product.

The problem is solved by the use mentioned in the following items 1 to 9.
(a) Use of components (a) and (b) in a fruit juice-containing beverage wherein no heavy sweetness remains both at taking and after taking a light feeling is continuously given even though stored under warming condition for a long time, comprising, in addition to a fruit component and a base having sweetness, components (a) and (b):one or more refreshing feeling substances selected from the group consisting of menthol, menthone, camphor, pulegol, isopulegol, pulegone, cineol, mint oil, peppermint oil, spearmint oil, eucalyptus oil, and fractions thereof; and
(b) one or more cool feeling substances selected from the group consisting of 3-I-menthoxypropane-1, 2-diol, N-ethyl-p-menthane-3-carboxamide, 3-I-menthoxy-2-methylpropane-1, 2-diol, p-menthane-3,8-diol, 2-1-menthoxyethane-1-ol, 3-I-menthoxypropane-1-ol and 4-I-menthoxybutane-1-ol.
   2. Use according to item 1 wherein the fruit component is a straight fruit juice or a concentrated fruit juice or blends of two or more fruit juice components.
   3. Use according to item 1, wherein the base having sweetness comprises one or more kinds selected from the group consisting of sorbitol, glycerin, propylene glycol, saccharin sodium salt, aspartame, xylose, maltose, glucose, sucrose, maltitol, maltooligosaccharide, erythritol, xylitol, sucrarose, acesulfam K, glycyrrhizin, glycyrrhizin dipotassium, stevia, fructooligo-saccharide, honey, and a licorice extract.
   4. Use according to item 1, wherein the total amount of addition of a refreshing feeling substance and a cool feeling substance is from 0.00005 to 0.05% by mass based on the amount of fruit juice-containing beverage.
   5. Use according to item 1, wherein, in the mass ratio of a refreshing feeling substance to a cool feeling substance, the cool feeling substance is from 0.01 to 100 parts by mass based on 1 part by mass of the refreshing feeling substance.
   6. Use according to item 2, wherein the straight fruit juice or the concentrated fruit juice is a juice of citrus fruits, apples, peaches, grapes, blue berries, raspberries, strawberries, melons, Japanese apricots, cassis, and marumelos.
   7. Use according to item 1, wherein the fruit juice-containing beverage is a fruit beverage, and the fruit beverage is a fruit juice beverage, a carbonated beverage, soft drinks, sports drinks, near water, an alcohol beverage, health and nutrient drinks, dietary supplements, a fruit wine, or stimulant and energy beverages including coffee, tea, and cocoa.
   8. Use according to item 1, wherein the fruit juice-containing beverage is a dairy drink.
   9. Use according to any one of items 1 to 6, wherein the fruit juice-containing beverage comprises one or more additional flavor improving substances selected from the group consisting of a vanillyl alkyl ether derivative (alkyl group having 1 to 6 carbons), 4-(I-menthoxy-methyl)-2-(3',4'-dihydroxyphenyl)-1,3- dioxolane, 4-(1-menthoxy-methyl)-2-(3'-methoxy-4'-hydroxyphenyl)-1,3 -dioxolane; 4-(I-menthoxy-methy)-2-(3'-ethoxy-4'-hydroxyphenyl)-1,3-dioxolane, an alkanoic acid vanillamide (alkyl group having 7 to 12 carbons), a vanillin or ethyl vanillin alkylene glycol acetal (alkylene group having 3 to 6 carbons), ginger oleoresin, capsicum oleoresin, pepper oleoresin, zingerone, piperidine, dihydrocapsaicin, capsaicin, jambu oleoresin, spilanthol, sanshool, sanshoamide, piper nigrum, zanthoxylum piperitum, chavicine, piperine, and a morphologically processed form thereof.

### Effect of the Invention

Though the fruit juice-containing food product of the present invention contains a fruit component and a base having sweetness, it has no remaining taste of heavy sweetness both at taking and after taking, gives a continuous refreshing feeling, shows high acceptability, and shows a suppressed decrease of a right feeling even when stored under warming condition for a long time. In addition these effects are achieved in any types of the fruit juice-containing food product, for example, a fruit juice-containing beverage, a fruit juice-containing confectionary product or a fruit juice-containing dairy product.

### Mode for Carrying Out the Invention

Further detailed description will be given of the present invention below.

The fruit juice-containing food product of the present invention means a food product comprising the fruit component as described above, and the fruit component means fruit juices such as a straight fruit juice, a concentrated fruit juice and blends of two or more fruit juice components, fruit extract, and processed products such as concentrated essence thereof. The type of the food product in the fruit juice-containing food product of the present invention is not limited but representative ones as a fruit juice-containing beverage such as a fruit beverage, a fruit juice-containing confectionary product such as a fruit confectionary product, and a fruit juice-containing dairy product such as a fruit dairy product.

The fruit beverage comprises, for example, a fruit juice beverage, a carbonated beverage, soft drinks, sports drinks, near water, an alcohol beverage, health and nutrient drinks, dietary supplements, a fruit wine, and stimulant and energy beverages including but not limited to coffee, tea, and cocoa. The fruit confectionary product comprises, for example, a candy, a chewing gum, a bubble gum, a hard candy, an ice candy, a throat lozenge, a cough drop, an edible film, a pressed mint tablet, a mint, a chocolate, a medicated lozenge and a chewable medicine. The fruit dairy product comprises, for example, a milk product, a dairy drink, a yogurt, a sherbet and an ice cream. Of these, beverages are suitable.

The type of the beverage product in the fruit juice-containing beverage of the present invention is not limited but representative ones as "a fruit drink" which contains a fruit juice component at 10% or more in it, for example, a soft drink with fruit juice and a fruit juice with bits of fruit pulp. The fruit drink is classified into a concentrated fruit juice, a fruit juice, a blended fruit juice, a fruit juice with bits of fruit pulp, a blended fruit and vegetable juice and a beverage with fruit juice according to the Japanese Agricultural Standard (JAS) and the Fair Competition Code on Representations in the Fruit Beverages. As the other non-carbonated soft drinks, there are illustrated a sports drink and a health and nutrient drink. On the other hand, as carbonated drinks, there are illustrated a flavor-type carbonated drink with fruit juice.

In addition, the fruit juice-containing beverage of the present invention includes a fruit component-containing beverage which contains the fruit juice component under such as"a near water with fruit juice", that is not authorized as a fruit beverage by the Standard and therefore belongs a new category as a fruit juice-containing beverage.

Further the fruit juice-containing beverage of the present invention includes fruit liquors such as shochu mixed with soda water with fruit juice and alcohol drinks such as liqueurs.

Furthermore the fruit juice-containing beverage of the present invention includes diluted drinks such as a home diluted drink or a diluted drink in a vending machine and so on.

The form and material of the vessel for the fruit juice-containing beverage may be any forms and materials which have so far been used for the fruit juice-containing beverage, for example, a plastic vessel or a glass bottle which is generally used and in which the contents are visible from the outside, a metal can such as a steel can or an aluminum can, and a paper package, but not limited especially. A sterilizing condition in the production process of the fruit juice-containing beverage is mainly a hot pack method and it is also possible to utilize a retort sterilizing method, a pasteurizing method, a germ-free filtering method and the like, but it is not limited.

The sort of fruit juices is not limited and there are exemplified as fruit juice, citrus fruit juice such as sweet orange juice, mandarin orange juice, grapefruit juice, lemon juice and lime juice, apple juice, grape juice, peach juice, tropical fruit juice such as pineapple juice, guava juice, banana juice, mango juice, acerola juice, papaya juice, and passion fruit juice, the other fruit juice such as Japanese apricot juice, pair juice, apricot juice, plum juice, blue berry juice, raspberry juice, and kiwi fruit juice, tomato juice, carrot juice, strawberry juice and melon juice. Of these, citrus fruit juice, apple juice, peach juice, grape juice, blue berry juice, raspberry juice, strawberry juice, melon juice, Japanese apricot juice and cassis juice are suitable, and citrus fruit juice, grape juice, Japanese apricot juice and cassis juice are more suitable.

As forms in use of the fruit component, there are illustrated a form just as it is or a form of flavors or the like, and the fruit component of the above-mentioned form is compounded into the fruit juice-containing beverage of the present invention. The fruit juice can be used as a form of straight fruit juice, which is employed as it is, and a form of concentrated fruit juice in the present invention. The concentrated fruit juice may be regulated the saccharinity with sugar, honey or the like or the acid degree according to circumstances. In addition, a juice of a whole fruit which is prepared by crushing a whole fruit including the skin but picking out only specially rough and stiff solids such as seeds, a fruit puree which is prepared by straining fruits, crushed dry fruits and a fruit juice prepared by extracting dry fruits can also be used as the fruit component.

The amount of the fruit component is not limited. However from the point of the taste, it is preferably from by mass to by mass, and more preferably from by mass to by mass converted to straight fruit juice in the fruit juice-containing beverage that is the end product.

As the base having sweetness of the present invention, there are illustrated the same ones which were so far used for the fruit juice-containing beverage. Examples of the base having sweetness include, for example, polyhydric alcohols, sugars, sugar alcohols, natural sweetener nonsaccharides, amino acid type sweeteners, and synthetic sweeteners. The base having sweetness of the present invention is specifically exemplified below. But as they are just some examples for the base having sweetness, it is needless to say that the base having sweetness of the present invention is not limited by them.

That is, as polyhydric alcohol, there are illustrated glycerin, propylene glycol and so on. In the present invention, the saccharide means a general saccharide in which sugar alcohol is excluded from the sum total of monosaccharide and disaccharide, oligosaccharide and derivatives thereof. Examples of the general saccharide include, for example, sucrose, iosmerized, saccharide, glucose, fructose, lactose, maltose, xylose and isosmerized lactose. Examples of the oligosaccharide include, for example, fructooligosaccharide, maltooligosaccharide, isomaltooligosaccharide and galactooligosaccharide. Examples of the saccharide derivatives include, for example, coupling sugar, paratinose and sucralose.

Further the sugar alcohol is a generic term for polyhydric alcohol which is produced by reducing an aldehyde group or a ketone group in saccharide to a primary or secondary alcohol group respectively. Examples of the sugar alcohol include, for example, maltitol, sorbitol, erythritol, xylitol, lactitol, palachinit and saccharificated reduced starch.

The saccharide and sugar alcohol are classified as low sweetener. The degree of sweetness is regulated by the comparative degree of sweetness with sucrose being put on sweetness. (refer to Non-patent Literature No. below). Many saccharide and sugar alcohol have same or less sweetness than sucrose (sweetness degree Such sweeteners having lower degree of sweetness than sucrose are ordinarily added in large quantities than when sucrose is used.

Specific examples of the sweetness degree of saccharide and sugar alcohol are illustrated. That is, it is said that the degree of sweetness of lactose is from 0.2 to 0.3, maltose is 0.4, and xylose is from 0.4 to 0.8 concerning saccharide. On the other hand, concerning sugar alcohol, it is said that the degree of sweetness of sorbitol is from 0.6 to 0.7, erythritol is 0.8, xylitol is 0.6, and saccharificated reduced starch is from 0.1 to 0.6.

Non-patent Literature No.1: Beverage Terminology Dictionary, Beverage Japan Inc. (June 25, 1999).

On the other hand, the natural sweetener nonsccharide in the present invention means mainly a sweetener with high degree of sweetness that is extracted from natural plants and so on. Specific examples thereof include, for example, stevia, glycyrrhizin, dipotassium glycyrrhizate, thaumatin, monellin, hydrangea tea extract, glycyrrhiza extract and momordica grosvenori extract. In the present invention, the amino acid type sweetener means mainly a sweetener with high degree of sweetness that is derived from amino acid, and specific examples thereof include aspartame and alitame. Further the artificial sweetener means artificial sweeteners with high degree of sweetness not classified in the above, and specific examples thereof include, for example, acesulfame K, sucralose, neohesperidine dihydrochalcone and saccharin sodium salt. For specific examples of the degree of sweetness concerning these sweeteners with high degree of sweetness against the sucrose, it is said that the degree of sweetness of stevia is from 200 to 350, glycyrrhizin is from to 300, thaumatin is from 750 to 3,000, monellin is about 3,000, aspartame is from 180 to 200, alitame is about 2,000, acesulfame K is from 130 to 150, sucralose is from 500 to 1, and saccharin sodium salt is from 300 to 500.

The refining degree of the base having sweetness in the present invention is not limited. The base having sweetness available from the market may be used in the present invention. The modes of the base having sweetness of the present invention include, for example, a grain article, a liquid article, a crystal article and a granulated article, but is not limited to these articles. Ordinarily, the liquid or granular article is preferably used in producing a beverage.

When the sugars, sugar alcohols and natural sweetener nonsaccharides are used for the base having sweetness in the present invention, materials which contain at least one member of them may be used as the base. As the base which contains at least one member of sugars, sugar alcohols and natural sweetener nonsaccharides, there are illustrated, for example, an extract of farm products and a refined article thereof. The extract of farm products or the refined article thereof described above means the component which is obtained by extraction of the farm products containing at least one member of sugars, sugar alcohols and natural sweetener nonsaccharides, such as grains, vegetables, fruits, potatoes, millets, beans and plants or refining thereof. The method of the extraction or the refining is not particularly limited. As the extraction materials or refining materials of the farm products, a fruit juice itself is preferably used, and more preferably fruit juices with high saccharinity such as banana juice, mango juice and passion fruit juice. And most of these fruit juices are available from the market.

In the present invention, the amount and concentration of the added base having sweetness depends on the sort and amount of the fruit juice and the using solvents, and may be made properly within a range in which the good sweetness and taste can be obtained finally. Generally the concentration of the base having sweetness added into the fruit juice-containing beverage of the present invention lies in the range from 1 g/L to 400 g/L, preferably from 50 g/L to 100 g/L against the all amount of the fruit juice-containing beverage.

In the present invention, the sort and the compounding ratio of the base having sweetness can be properly set according to the compounding purpose. For example, for producing a fruit juice-containing beverage with a strong sweetness, it is suitable to use only a base having a relatively higher degree of sweetness as the base having sweetness of the present invention or to make the use ratio of the base having a relatively higher degree of sweetness to be high. For producing a fruit juice-containing beverage with a light sweetness, it is preferable to avoid employing the base having high degree of sweetness or to make the amount of the base with high degree of sweetness lower than the amount at which aiming degree of sweetness is obtained, for example, the amount of sucrose or granulated sugar being made less one to ten, half, two to three or three to four than the amount required for obtaining the necessary sweetness. And as the rest of the base, there are used the bases with low degree of sweetness in the base having sweetness of the present invention, selected from, for example, isomerized saccharide, glucose, fructose, lactose, maltose, xylose, isomerized lactose, fructooligosaccharide, maltooligosaccharide, isomaltooligosaccharide, galactooligosaccharide, coupling sugar, paratinose, sucralose, maltitol, sorbitol, erythritol, xylitol, lactitol, palachinit and saccharificated reduced starch, and preferably glucose, maltose, xylose, maltooligosaccharide, isomaltooligosaccharide, sucralose, maltitol, sorbitol, erythritol, and xylitol.

An example of the selecting method of the base having sweetness and the setting method of the amount of the base having sweetness of the present invention is shown below.

First, the sweetness of a fruit juice-containing beverage to be settled is decided by using only sucrose as sweetener, and then the degree of sweetness of the sucrose (the value is 1) is multiplied by the adding amount thereof and get a value, that is: [Degree of sweetness of sucrose (1)] X [Amount of sucrose added].

Then in the process of preparing the fruit juice-containing beverage of the present invention, the value obtained by multiplication is set as the target value, and the total sum of multiplied values of the degree of sweetness and the amount of the bases having sweetness of the present invention intended to be added into is regulated to become as same value as the target, and also the sort and the amount are adjusted in the range within which the fruit juice-containing beverage has no remain of heavy sweetness both at taking and after taking, shows continuous light feeling and gives high effectiveness in acceptability. In addition, when the plural bases having sweetness of the present invention are added into the fruit juice-containing beverage, there are some cases where the resultant sweetness changes by the synergistic effect. In these cases, the actual sweetness obtained by addition of a pre-converted amount of the sweetness differs from the intended sweetness. In such occasion, an adding amount of the bases may be fine-adjusted properly. Further there are some cases where the resultant sweetness changes by the solvent used. In such case the same fine-adjustment would be taken.

In the invention, a refreshing feeling substance is used as component (a) that is one of the essential components of the present invention. Specific examples of the refreshing feeling substances include menthol, menthone, camphor, pulegol, isopulegol, pulegone, cineol, mint oil, peppermint oil, spearmint oil, eucalyptus oil, fractions thereof and so on. The effects of these refreshing feeling substances are partially different by the difference of the geometrical or optical constitution thereof. However all of these refreshing feeling substances show a cooling effect. These refreshing feeling substances may be used alone, or used in plurals together. As the refreshing feeling substance of the component (a) of the present invention, materials containing menthol as the main component are particularly preferred because these have superior effects of the present invention and are easy to get.

Further, in the invention, a cool feeling substance is used as component (b) that is the one of the essential components of the present invention. Specific examples of the cool feeling substance include 3-1-menthoxypropane-1,2-diol, N-ethyl-p-menthane-3-carboxamide, 3-1-menthoxy-2-methylpropane-1,2-diol, p-menthane-3,8-diol, 2-1-menthoxyethane-1-ol, 3-1-menthoxypropane-1-ol, 4-1-menthoxybutane-1-ol. These cool feeling substances have some differences in the effects by the difference of the geometrical or optical constitution thereof. However all of those show a cool feeling effect. These cool feeling substances may be used alone, or used in plurals together. As the cool feeling substance of the component (b) of the present invention, the use of 3-1-menthoxoxypropane-1,2-diol, 3-1-menthoxy-2-methylpropane-1,2-diol or p-menthane-3,8-diol, 2-1-menthoxyethane-1-ol as the main component is particularly preferred because it shows superior effects of the present invention and is easy to get. In addition, both the refreshing feeling substance of the component (a) and the cool feeling agent substance of the component (b) show a cool feeling effect. However, these substances differ from that the refreshing feeling substance goes with an aroma but the cool feeling substance shows small contribution in an aroma.

The refreshing feeling substance of the component (a) and the cool feeling substance of the component (B) of the present invention are used together as a mixture in the range within which the effect of the present invention is not ruined. But the mixture ratio of the refreshing feeling substance of the component (a) and the cool feeling agent substance of the component (B) is in the rang from 0.001 part by mass to 200 parts by mass based on 1 part by mass of the refreshing feeling substance, preferably from 0.01 part by mass to 100 parts by mass, more preferably from 0.1 part by mass to 10 parts by mass. The reason is that good effects are obtained, for example, the stimulus caused by these components is weak and the continuation of the refreshing feeling is long when the mixture ratio lies in such ranges. And "the mixture" in the present invention means, besides the mode wherein the component (a) and the component (b) are mixed before the adding, the mode wherein the component (a) and the component (b) are added to the fruit juice-containing beverage separately and as a result they are used together in it.

The compounding amount of the mixed component of the refreshing feeling substance (a) and the cool feeling substance (b) (hereinafter the mixed component may be represented "a mixed cool feeling component of the components (a) + (b)") can be adjusted properly according to the sort of fruits and bases having sweetness to be used. And with regard to the stability and cool feeling effect of the mixed cool feeling component of the components (a) + (b), a preferred compounding amount thereof lies in the range from 0.00005% by mass to 0.05% by mass against the fruit juice-containing beverage.

In the present invention, a hot feeling agent substance of the flavor improving substance of component (c) may be used further, if necessary. As the hot feeling agent substance of component (c), any substances usually known as hot feeling agent substance can be used. Examples of the hot feeling agent substance include, for example, a vanillyl alkyl ether derivative (alkyl group having 1 to 6 carbons), 4-(1-menthoxy-methyl)-2-(3',4'-dihydroxyphenyl)-1,3-dioxolane, 4-(1-menthoxy-methyl)-2-(3'-methoxy-4'hydroxyphenyl)-1, 3-dioxolane, 4-(1-menthoxy-methyl)-2-(3'-ethoxy-4'-hydroxyphenyl)-1,3-dioxolane, an alkanoic acid vanillamide (alkyl group having 7 to 12 carbons), a vanillin or ethyl vanillin alkylene glycol acetal (alkyllene group having 3 to 6 carbons), ginger oleoresin, capsicum oleoresin, pepper oleoresin, zingerone, piperdine, dihydrocapsaicin, capsaicin, jambu oleoresin, spilanthol, sanshool, sanshoamide, *piper nigrum, zanthoxylum peperitum,* chavicine, piperine, and/or a morphologically processed form thereof. Of these, a vanillyl alkyl ether derivative (alkyl group having 1 to 6 carbons) is suitable.

Examples of the alkyl group in the vanillyl alkyl ether derivative (alkyl group having 1 to 6 carbons) include, for example, a methyl group, an ethyl group, a n-propyl group, an isopropyl group, a n-butyl group, an isobutyl group, a t-butyl group, and a pentyl group, and of these groups a butyl group is especially preferred. The hot feeling agent substance may be used alone or as a mixture of two or more thereof. The compounding amount of the hot feeling agent substance such as vanillyl alkyl ether may be in the range within which a hot feeing effect is not given to the fruit juice-containing beverage in spite of compounding the hot feeling agent substance, and is generally from 0.001 part by mass to 200 parts by mass, preferably from 0.01 parts by mass to 100 parts by mass against the mixed cool feeling component of components (a) + (b).

In the present invention, a flavor (a perfume for food and drink) may be further compounded into the fruit juice-containing beverage. As a result, a pleasant aroma can be given to the fruit juice-containing beverage. Depending on the component comprising the fruit juice-containing beverage, there are some cases where a peculiar smell based on the substrate of the component occurs slightly. In such occasion, the flavor can mask the smell and exhibit sufficient deodorant effect. As the flavor used in the present invention, the flavor having fruit note is exemplified. And it is preferred to use the flavor having the fruit note as same as the fruit used in the fruit juice-containing beverage. The flavor having fruit note can be prepared from artificial flavors such as esters, alcohols, aldehydes, ketones, acetals, phenols, ethers, lactones, furans, hydrocarbons, nitrogen-containing compounds, sulfur-containing compounds and acids, and natural perfumes.

In the above artificial flavors, examples of the ester include, for example, acrylic esters (e.g. methyl or ethyl ester), acetoacetic esters (e.g. methyl or ethyl ester), anisic esters (e.g. methyl or ethyl ester), benzoic esters (e.g. allyl, isoamyl, ethyl, geranyl, linalyl, phenylethyl, hexyl, cis-3-hexenyl, benzyl or methyl ester), anthranilic esters (e.g. cinnamyl, cis-3-hexenyl, - methyl, ethyl, linalyl or isobutyl ester), N-methylanthranylic esters (e.g. methyl or ethyl ester), isovaleric esters (e.g. amyl, allyl, isoamyl, isobutyl, isopropyl, ethyl, octyl, geranyl, cyclohexyl, citronellyl, terpenyl, linalyl, cinnamyl, phenylethyl, butyl, propyl, hexyl, benzyl, methyl or rhodinyl ester), isobutylic esters (e.g. isoamyl, geranyl, citronellyl, terpenyl, cinnamyl, octyl, neryl, phenylethyl, phenylpropyl, phenoxyethyl, butyl, propyl, isopropyl, hexyl, benzyl, methyl, ethyl, linalyl or rhodinyl ester), undecylenic esters (e.g. allyl, isoamyl, butyl, ethyl or methyl ester), octanoic esters (e.g. allyl, isoamyl, ethyl, octyl, hexyl, butyl, methyl or linalyl ester), octenoic esters (e.g. methyl or ethyl ester), octynecarboxylic esters (e.g. methyl or ethyl ester), caproic esters (e.g. allyl, amyl, isoamyl, methyl, isobutyl, propyl, hexyl, cis-3-hexenyl, trans-2-hexenyl, linalyl, geranyl or cyclohexyl ester), hexenoic esters (e.g. methyl or ethyl ester), valeric acid esters (e.g. amyl, isopropyl, isobutyl, ethyl, cis-3-hexenyl, trans-2-hexenyl, cinnamyl, phenylethyl or methyl ester), formic esters (e.g. anisyl, isoamyl, isopropyl, ethyl, octyl, geranyl, citronellyl, cinnamyl, cyclohexyl, terpinyl, phenylethyl, butyl, propyl, hexyl, cis-3-hexenyl, benzyl, linalyl or rhodinyl ester), crotonic esters (e.g. isobutyl, ethyl or cyclohexyl ester), cinnamic esters (e.g. allyl, ethyl, isopropyl, propyl, 3-phenylpropyl, benzyl, cyclohexyl or methyl ester), succinic acid esters (e.g. monomenthyl, diethyl or dimethyl ester), acetic esters (e.g. anisyl, amyl, α-amylcinnamyl, isoamyl, isobutyl, isopropyl, isobornyl, isoeugenyl, eugenyl, 2-ethylbutyl, ethyl, 3-octyl, carbyl, dihydrocarbyl, p-cresyl, o-cresyl, geranyl, α-or β-santalyl, cyclohexyl, cycloneryl, dihydrocuminyl, dimethyl benzyl carbinyl, cinnamyl, styralyl, decyl, dodecyl, terpinyl, guainyl, neryl, nonyl, phenylethyl, phenylpropyl, butyl, furfuryl, propyl, hexyl, cis-3-hexenyl, trans-2-hexenyl, cis-3-nonenyl, cis-6-noneyl, cis-3- or cis-6-nonadienyl, 3-methyl-2-butenyl, pregyl, isopregyl, heptyl, benzyl, bornyl, myrcenyl, dihydromyrcenyl, myrtenyl, methyl, 2-methylbutyl, menthyl,
linalyl or rhodinyl ester), salicylic esters (e.g. allyl, isoamyl, phenyl, phenylethyl, benzyl, ethyl or methyl ester), cyclohexylalkanoic esters (e.g. ethyl cyclohexylacetate, allyl cyclohexylpropionate, allyl cyclohexylbutylate, allyl cyclohexylhexanate, allyl cyclohexyldecanate or allyl cyclohexylvalerate), stearic esters (e.g. ethyl, propyl or butyl ester), sebacic esters (diethyl or dimethyl ester), decanic esters (e.g. isoamyl, ethyl, butyl or methyl ester), dodecanic esters (e.g. isoamyl, ethyl or butyl ester), lactic esters (e.g. isoamyl, ethyl or butyl ester), nonanoic esters (e.g. ethyl, phenylethyl or methyl ester), nonenoic esters (e.g. allyl, ethyl or methyl ester), hydroxyhexanoic acid esters (e.g. ethyl or methyl ester), phenylacetic esters (e.g. isoamyl, isobutyl, ethyl, geranyl, citronellyl, cis-3-hexenyl or methyl ester), phenoxyacetic esters (e.g. allyl, ethyl or methyl ester), furancarboxylic esters (e.g. ethyl furancarboxylate, methyl furancarboxylate, hexyl furancarboxylate or isobutyl furanpropionate), propionic esters (e.g. anisyl, allyl, ethyl, amyl, isoamyl, propyl, butyl, isobutyl, isopropyl, benzyl, geranyl, cyclohexyl, citronellyl, cinnamyl, tetrahydorofurfuryl, tricyclodecenyl, heptyl, bornyl, methyl, menthyl, linallyl, terpinyl, α-methylpropionyl or β-methylpropionyl ester), heptanoic esters (e.g. allyl, ethyl, octyl, propyl or methyl ester), heptynecarboxylic esters (e.g. allyl, ethyl, propyl or methyl ester), myristic esters (e.g. isopropyl, ethyl or methyl ester), phenylglycidic esters (e.g. ethyl phenylglycidate, ethyl 3-methylphenylglycidate or p-methyl-β-phenylglycidic acid ethyl ester), 2-methylbutylic esters (e.g. methyl, ethyl, octyl, phenylethyl, butyl, hexyl or benzyl ester), 3-methylbutylic esters (e.g. methyl or ethyl ester), butylic esters (e.g. anisyl, amyl, allyl, isoamyl, methyl, ethyl, propyl, octyl, guainyl, linalyl, geranyl, cyclohexyl, citronellyl, cinnamyl, neryl, terpenyl, phenylpropyl, β-phenylethyl, butyl, hexyl, cis-3-hexenyl, trans-2-hexenyl, benzyl or rhodinyl ester), and hydroxybutyric acid esters (e.g. methyl, ethyl or menthyl ester of 3-hydroxybutyric acid).

Preferred examples of the alcohol include, for example, aliphatic alcohols (e.g. isoamyl alcohol, 2-ethylhexanol, 1-octanol, 3-octanol, 1-octene-3-ol, 1-decanol, 1-dodecanol, 2,6-nonadienol, nonanol, 2-nonanol, cis-6-nonenol, trans-2- or cis-6-nonadienol, cis-3- or cis-6-nonadienol, butanol, hexanol, cis-3-hexenol, trans-2-hexenol, 1-undecanol, heptanol, 2-heptanol or 3-methyl-1-pentanol), terpene alcohols (e.g. borneol, isoborneol, carveol, geraniol, α- or β-santalol, citronellol, 4-thujanol, terpineol, 4-terpineol, nerol, myrcenol, myrtenol, dihydromyrcenol, tetrahydromyrcenol, nerolidol, hydroxycitronellol, piperitol, farnesol, pulegol, isopulegol, perillyl alcohol, menthol, rhodinol or linalool), and aromatic alcohols (e.g. anise alcohol, α-amylcinnamic alcohol, isopropylbenzylcarbinol, carvacrol, cumin alcohol, dimethylbenzylcarbinol, cinnamic alcohol, phenylallyl alcohol, phenylethylcarbinol, β-phenylethyl alcohol, 3-phenylpropyl alcohol or benzyl alcohol).

Preferred examples of the aldehyde include, for example, aliphatic aldehydes (e.g. acetaldehyde, octanal, nonanal, decanal, undecanal, 2,6-dimethyl-5-heptanal, 3,5,5-trimethylhexanal, cis-3- or cis-6-nonadienal, trans-2- or cis-6-nonadienal, valeraldehyde, propanal, isopropanal, hexanal, trans-2-hexenal, cis-3-hexenal, 2-pentenal, dodecanal, tetradecanal, trans-4-decenal, trans-2-tridecenal, trans-2-dodecenal, trans-2-undecenal, 2,4-hexadienal, cis-6-nonenal, trans-2-nonenal or 2-methylbutanal), aromatic aldehydes (e.g. anis aldehyde, α-amylcinnamic aldehyde, α-methylcinnamic aldehyde, cyclamen aldehyde, p-isopropylphenylacetaldehyde, ethylvanillin, cumin aldehyde, salicylaldehyde, cinnamic aldehyde, o-, m- or p-tolylaldehyde, vanillin, piperonal, phenylacetaldehyde, heliotropin, benzaldehyde, 4-methyl-2-pheny-2-pentenal, p-methoxycinnamic aldehyde or p-methoxybenzaldehyde), and terpene aldehydes (e.g. geranial, citral, citronellal, α-sinensal, β-sinensal, perillaldehyde, hydroxycitronellal, tetrahydrocitral, myrtenal, cyclocitral, isocyclocitral, citronellyloxyacetaldehyde, neral, α-methylenecitronellal, myracaldehyde, vernaldehyde or safranal).

Preferred examples of the ketone include, for example, cyclic ketones (e.g. menthone, isomenthone, carvone, dihydrocarvone, pulegone, isopulegone, piperitone, 1-acetyl-3,3-dimethyl-1-cyclohexen, cis-jasmone, α-, β- or γ-irone, ethyl maltol, cyclotene, dihydronootkatone, 3,4-dimethyl-1,2-cyclopentadione, sotolon, α-, β-, γ- or δ-damascone, α-, β- or γ-damacenone, nootkatone, 2-sec-butylcyclohexanon, maltol, α-, β- or γ-ionone, α-, β- or γ-methylionone, α-, β- or γ-isomethylionone, furaneol or camphor), aromatic ketones (e.g. acetonaphthone, acetophenone, anisylidene acetone, raspberry ketone, p-methylacetophenone, anisilacetone or p-methoxyacetophenone), and chain ketones (e.g. diacethyl, 2-nonanone, 2-hepthanone, 2,3-heptanedione, 2-pentanone, methylamyl ketone, methylnonyl ketone, β-methylnaphtyl ketone, methylheptanone, 3-heptanone, 4-heptanone, 3-octanone, 2,3-hexandione, 2-undecanone, dimethyl-octenone or 6-methyl-5-heptyne-3-one).

Preferred examples of the acetal include, for example, acetaldehyde diethyl acetal, acetaldehyde diamyl acetal, acetaldehyde dihexyl acetal, acetaldehyde propylene glycol acetal, acetaldehyde ethyl cis-3-hexenyl acetal, benzaldehyde glyceryl acetal, benzaldehyde propylene glycol acetal, citral dimethyl acetal, citral diethyl acetal, citral propylene glycol acetal, citral ethylene glycol acetal, phenylacetaldehyde dimethyl acetal, citronellyl methyl acetal, acetaldehyde phenylethylpropyl acetal, hexanal dimethyl acetal, hexanal dihexyl acetal, hexanal propylene glycol acetal, trans-2-hexenal diethyl acetal, trans-2-hexenal propylene glycol acetal, cis-3-hexenal diethyl acetal, heptanal diethyl acetal, heptanal ethylene glycol acetal, octanal dimethyl acetal, nonanal dimethyl acetal, decanal dimethyl acetal, decanal diethyl acetal, 2-methylundecanal dimethyl acetal, citronellal dimethyl acetal, Ambersage (manufactured by Givaudan company), ethyl acetacetate ethylene glycol acetal and 2-phenylpropanal dimethyl acetal.

Preferred examples of the phenol include, for example, eugenol, isoeugenol, 2-metoxy-4-vinylphenol, thymol, carvacrol, guaiacol, and chavicol.

Preferred examples of the ether include, for example, anethole, 1,4-cineole, 1,8-cineole, dibenzyl ether, linalool oxide, limonene oxide, nerol oxide, rose oxide, methyl isoeugenol, methyl chavicol, isoamyl phenyl ethyl ether, β-naphtyl methyl ether, phenyl propyl ether, p-cresyl methyl ether, vanillyl butyl ether, α-terpinyl methyl ether, citronellyl ethyl ether, geranyl ethyl ether, rosefuran, theaspirane, decylmethyl ether and methylphenyl methyl ether.

Preferred examples of the lactone include, for example, γ-or δ-decalactone, γ-heptalactone, γ-nonalactone, γ- or δ-hexalactone, δ- or δ-octalactone, γ- or δ-undecalactone, δ-dodecalactone, δ-2-decenolactone, methyl lactone, 5-hydroxy-8-undecenoic acid δ-lactone, jasmine lactone, menthalactone, dihydrocoumarin, octahydrocoumarin and 6-methylcoumarin.

Preferred examples of the furan include, for example, furan, 2-methylfuran, 3-methylfuran, 2-ethylfuran, menthofuran, 2,5-diethyltetrahydrofuran, 3-hydroxy-2-methyltetrahydrofuran, 2-(methoxymethyl)furan, 2,3-dihydrofuran, furfural, 5-methylfurfural, 3-(2-furyl)-2-methyl-2-propenal, 5-(hydroxymethyl)furfural, 2,5-dimethyl-4-hydroxy-3(2H)-furanone (furaneol), 4,5-dimethyl-3-hydroxy-2(5H)-furanone (sotolon), 2-ethyl-4-hydroxy-5-methyl-3(2H)-furanone (homofuraneol), 5-ethyl-3-hydroxy-4-methyl-2(5H)-furanone (homosotolon), 3-methyl-1,2-cyclopentanedione (cyclotene), 2(5H)-furanone, 4-methyl-2(5H)-furanone, 5-methyl-2(5H)-furanone, 2-methyl-3(2H)-furanone, 5-methyl-3(2H)-furanone, 2-acethylfuranone, 2-acethyl-5-methylfuran, furfuryl alcohol, methyl 2-furancarboxylate, ethyl 2-furancarboxylate, and furfuryl acetate.

Preferred examples of the hydrocarbon include, for example, α- or β-bisabolene, β-caryophyllene, p-cymene, terpinene, terpinorene, cadinene, farnesene, limonene, ocimene, myrcene, α-or β-pinene, 1,3,5-undecatriene, and valencene.

Preferred examples of the nitrogen-containing compound include, for example, phenylmethylpentanonitryl, indole, 2-mehtyl-6-ethoxypyrazine and 2-isobutyl-3-methoxypyrazine.

In the above synthetic perfumes, preferred examples of the sulfur-containing compound include, for example, dimethyl trisulfide, methyl 3-(methylthio)propionate, ethyl 3-(methylthio)propionate, 3-mercaptopropionic acid, limonenethiol, thioterpinenol, thiogeraniol, 2-furfuryl disulfide, 8-mercaptomenthone, 5-methyl-2-thiophenecarboxy aldehyde, furfurylmonosulfide, furfurylmercaptan, methionol, methional, bis(2-furyl) sulfide, bis(2-furyl) disulfide, 4,5-dihydro-3-(2H)thiophene, ethyl thioacetate, allyl isothiocyanate, 2,6-dimethylthiophenol, ethyl 3-(furfurylthio)propionate, ethyl 4-(methylthio)butylate, 3-methyl-1,2,4-trithiane, 2-pentanethiol, 4-methyl-5-thiazolethanol, and 4-methyl-5-thiazolacetate.

Preferred examples of the acid include, for example, acetic acid, propionic acid, butyric acid, isobutyric acid, 2-methylbutanoic acid, 2-ethylbutanoic acid, valeric acid, isovaleric acid, 3-methylvaleric acid, hexanoic acid, 2-hexenoic acid, 2-methyl-2-pentanoic acid, 2-methylheptanoic acid, octanoic acid, nonanoic acid, decanoic acid, 2-decenoic acid, geranic acid, dodecanoic acid, myristic acid, stearic acid, lactic acid, phenylacetic acid, pyruvic acid, trans-2-methyl-2-pentenoic acid, 2-methyl-cis-3-pentenic acid, 2-methyl-4-pentenoic acid, and cyclohexanecarboxylic acid.

Further the natural flavors properly include, for example, anise oil, sweet orange oil, lemon oil, lime oil, mandarin oil, petitgrain oil, bergamot, lemon balm, grapefruit oil, elemi oil, olibanum oil, lemongrass oil, neroli oil, marjoram oil, angelica root oil, star anise oil, basil oil, bay oil, peppermint oil, spearmint oil, mint oil, pennyroyal oil, calamus oil, chamomile oil, caraway oil, cardamom oil, cassia oil, cinnamon oil, pepper oil, perilla oil, cypress oil, oregano oil, cascarilla oil, ginger oil, parsley oil, pine needle oil, sage oil, hyssop oil, tea-tree oil, mustard oil, horseradish oil, clary sage oil, clove oil, cognac, coriander oil, estragon oil, eucalyptus oil, fennel oil, guaiac wood oil, dill oil, cajuput oil, wormseed oil, pimento oil, juniper oil, fenugreek, garlic oil, laurel oil, mace oil, myrrh oil, nutmeg oil, spruce oil, geranium oil, citronella oil, lavender oil, lavandin oil, palmarosa oil, rose oil, rosemary oil, sandalwood oil, oakmoss absolute, cedarwood oil, vetiver oil, linaloe oil, bois de rose, patchouli oil, labdanum, cumin oil, thyme oil, ylang ylang oil, birch oil, capsicum oil, celery oil, Tolu balsam, genet absolute, immortelle, benzoin resin, jasmine abusolute, cassie absolute, tuberose absolute, marigold oil, mimosa absolute, opoponax, orris, vanilla or licorice. Also the flavor components contained in these natural perfumes can also be used.

The flavors used for the fruit juice-containing beverage of the present invention can be prepared as the flavor having the aimed fruit aroma by combining the above synthetic perfumes and natural perfumes properly.

Further, the flavors described in the known documents such as below Non-patent Literature Nos.2, 3 and 4 may also be used in the present invention as the aroma or flavor imparting agent besides the above-mentioned flavors.

Non-patent Literature No.2; "The investigation into the actual conditions concerning use of the flavor compounds for food in Japan", The Heisei 13 (2002) year' s Report of the Health and Labors Sciences Research, Japan Flavor & Fragrance Materials Association (March 2002).

Non-patent Literature No. 3; Motoichi Indou, Synthesis Aromas -chemistry and Information concerning to Goods-, Chemical Daily Co., Ltd., Mar. 6, 1996.

Non-patent Literature No.4; Steffen Arctender, Perfume and Flavor Chemicals (Aroma Chemicals), No.1 and No.2, 1969.

And in the present invention, the edible solvent, for example, alcohols such as ethanol or polyhydric alcohols such as propylene glycol or glycerin may be use with the above flavors if necessary. Also the flavor with various acceptability in taste can be prepared by compounding the flavors having, for example, mint note, citrus note, anis note, green note, spicy note, floral note, sweet note or others into the flavor used for the fruit juice-containing beverage of the present invention, if necessary.

The compounding amount of the above flavors is not limited, but a good result can be given by compounding the flavor, for example, from 0.01% by mass to 5% by mass based on the amount of the fruit juice-containing beverage.

As preferable compounding constitutions in production of the fruit juice-containing beverage of the invention, besides the above components, there are illustrated , for example, seasonings such as sodium L-glutaminate, glycine and DL-alanine; acidulants such as citric acid, tartaric acid, succinic acid, itaconic acid, lactic acid and acetic acid; colorants such as synthetic or natural colorants; enriching agents such as L-ascorbic acid, calcium chloride and L-serine; expanding agents such as ammonium chloride, ammonium carbonate and sodium hydrogencarbonate; preservatives such as sorbic acid, benzoic acid and milt protein extract; thickening stabilizers, emulsifiers or gum bases such as sodium alginate, fatty acid ester of glycerol, gum elemi, gum alabic, carrageenan, ester gum, lecithin and soybean saponin; minerals; liqueurs; and pastes. Further the food additives described in the prior documents, for example below Anti-Patent Literature Nos. 5 and 6, can also be used in the fruit juice-containing beverage of the present invention.

Anti-Patent Literature No.5: Manual of the Additives for Food (Chemically Synthetic Substances), Food and Science Co., Ltd., April 1996.

Anti-Patent Literature No.6: Manual of the Additives for Food (Set items), Food and Science Co., Ltd., December 1999.

Each component for producing the fruit juice-containing beverage of the present invention, that is the base having sweetness, the refreshing feeling substance, the cool feeling substance, the flavor and the other components, may be added in the optional step of the processes of producing the fruit juice-containing beverage of the present invention. As the process in which the components are added, there are illustrated processes of solving the fruit juice which is a raw material, brewing, extracting, separating, blending and compounding. And as the method of adding the components, there are illustrated, for example, a method of adding them into the raw material in advance, a method of adding them during mixing the raw component and a method of adding them into the intermediate of the beverage. The preferable mode is to add the components to be used in the present invention as fast as possible to the fruit juice. When the concentrated fruit juice is used as the raw material for the beverage, it is especially preferred to add the components to the fruit juice in the early step as possible for preventing the occurrence of the cloud and dregs in the equipment vessel for production in the producing process. The equipment vessel for manufacture mean equipment vessels, in which the mixture of the fruit juice and each component used in the invention such as the base having sweetness, the refreshing feeling substance, the cool feeling substance, the flavor and the other components is transiently kept in the factory of preparing the fruit juice-containing beverage products. It includes a dissolving tank of a raw material, a compounding tank and a diluting tank. The fruit juice-containing beverage of the present invention can be produced by not only these particularly described methods but also the method joining them and the known methods together.

### EXAMPLES

Hereinafter, the present invention will specifically be set forth in terms of Examples and Comparative Examples which, however, are not to be construed to limit the present invention in any way and may be altered without deviating from the scope of the present invention.

In addition, in the sensory evaluations below, all were evaluated by a total of 10 panelists, with 5 males and 5 females in their twenties. The results are shown with their average evaluations.

### Example 1, and Comparative Examples 1 to 4 (orange juice beverage) Preparation of Fruit Juice Beverages

Formulation components in accordance with the formulation in Table 1 below were blended and dissolved, and then the resultant material was heat-sterilized at 90°C. Thereafter, the material was filled into cans and then cooled to prepare each of the 1000 parts by mass of the orange juice beverages for Examples 1-(1) to 1-(7) and Comparative Examples 1 to 4. Additionally, menthol was used as the refreshing feeling substance, and 3-1-menthoxy-1,2-propanediol was used as the cool feeling substances. Also, as a reference was used peppermint oil in Comparative Example 2.

**Table 1**

| Formulation | Parts by mass |
|---|---|
| Orange juice concentrated by a factor of 5 | 5.0 |
| Sugar | 75.0 |
| Liquid sugar containing fructose and glucose (75%) | 50.0 |
| Citric acid (crystal) | 1.0 |
| Orange-like fruit flavor | 1.0 |
| Additives shown in Table 2 | Amounts shown in Table 2 |
| Purified water | Balance |
| Total | 1000 |

**Table 2**

| | Refreshing feeling substance | Cool feeling substance | peppermint oil |
|---|---|---|---|
| Example 1-(1) | 0.000045 | 0.000005 | - |
| Example 1-(2) | 0.00045 | 0.00005 | - |
| Example 1-(3) | 0.0009 | 0.0001 | - |
| Example 1-(4) | 0.009 | 0.001 | - |
| Example 1-(5) | 0.027 | 0.003 | - |
| Example 1-(6) | 0.045 | 0.005 | - |
| Example 1-(7) | 0.09 | 001 | - |
| Comparative Example 1 | - | - | - |
| Comparative Example 2 | - | - | 0.5 |
| Comparative Example 3 | 0.03 | - | - |
| Comparative Example 4 | 0.07 | - | - |

### Sensory Testing

Each of the orange juice beverages of Examples 1-(1) to 1-(7) and Comparative Examples 1 to 4 was subjected to comparative sensory evaluation in accordance with the evaluation criteria below for a light feeling, continuation of a light feeling, and a heavy feeling of sweetness in the mouth. The results are shown in Table 3.

### <Evaluation Criteria>

Light feeling in the mouth:

| | |
|---|---|
| - | especially weak |
| ± | slightly positive |
| + | strong |
| ++ | especially strong |
| +++ | too strong (with bitter taste) |

Continuation of light feeling:

| | |
|---|---|
| - | not continuous |
| ± | weakly continuous |
| + | strongly continuous |
| ++ | very strongly continuous |

Heavy feeling of sweetness:

| | |
|---|---|
| - | especially heavy taste and aftertaste |
| + | relatively heavy taste |
| ++ | light aftertaste without heavy taste |

**Table 3**

| | Light feeling in the mouth | Continuation of light feeling | Heavy feeling of sweetness |
|---|---|---|---|
| Example 1-(1) | ± | ± | - |
| Example 1-(2) | + | + | + |
| Example 1-(3) | + | + | + |
| Example 1-(4) | ++ | + | + |
| Example 1-(5) | ++ | ++ | ++ |
| Example 1-(6) | ++ | ++ | ++ |
| Example 1-(7) | +++^{*)} | ++ | ++ |
| Comparative Example 1 | - | - | - |
| Comparative Example 2 | ± - | - | - |
| Comparative Example 3 | ++ | ± | - |
| Comparative Example 4 | +++^{**)} | + | - |

| | | | |
|---|---|---|---|
| *) The smell of menthol is given off, and there is a bitter taste, that is offensive. **⁾ The smell of menthol is remarkably given off, and the bitter taste is slightly offensive. | | | |

Table 3 shows that in the amount of mixed cool feeling component (component produced by mixing a refreshing feeling substance and a cool feeling substance) ranging from 0.00005 to 0.05%, the beverage has a light feeling, sufficient continuation thereof, no heavy taste and further good flavor and taste. In particular, these characteristics of the beverage are excellent in the amount ranging from 0.0005 to 0.03%. On the other hand, when the amount exceeds 0.05, the beverage has too strong light feeling, gives off a smell of menthol, and has a bitter taste. In addition, the beverage of Comparative Example 1, to which the additives were not added, does not provide a light feeling. The beverage of Comparative Example 2 with peppermint oil provides light feeling but does not have the continuation thereof. When the additional amount of menthol that is a refreshing feeling substance is 0.03% as in Comparative Example 3, the obtained beverage can provide only a light feeling without the continuation thereof. When the additional amount of menthol is increased to 0.07% as in Comparative Example 4, the obtained beverage can provide a light feeling with continuation, however it gives off the smell of menthol and has a slight bitter taste.

### Example 2, and Comparative Examples 5 and 6 (lemon fruit juice beverage)

### Preparation of Fruit Juice Beverages

Formulation components in accordance with the formulation in Table 4 below were blended and dissolved, and then the resultant material was heat-sterilized at 90°C. Thereafter, the material was filled into cans and then cooled to prepare each of the 1000 parts by mass of lemon juice beverages for Examples 2-(1) to 2-(4) and Comparative Examples 5 to 6, and then the resultant beverages were stored at 60°C with standing for 20 days. In Examples 2-(1) to 2- (4), the cool feeling substance was used shown in Table 4. In addition, the lemon juice beverages of Comparative Example 5 without addition of the cool feeling substance and the lemon juice beverages of Comparative Example 6, to which was added 0.001 parts by mass of menthyl lactate as the cool feeling substance, were prepared. Also, the compound in Tables 5-1 and 5-2 was used as the cool feeling substance for each beverage.

**Table 4**

| Formulation | Parts by mass |
|---|---|
| Straight lemon juice | 3.0 |
| Sugar | 75.0 |
| Fructose, glucose and liquid sugar (75%) | 50.0 |
| Citric acid (crystal) | 1.0 |
| Citrus-like fruit flavor | 1.0 |
| Menthol | 0.009 |
| Cool feeling substance | 0.001 |
| Purified water | Balance |
| Total | 1000 |

### Sensory Testing

Each of the lemon juice beverages of Examples 2-(1) to 2-(4) and Comparative Examples 5 to 6 was subjected to comparative sensory evaluation in accordance with the evaluation criteria below for light feeling in the mouth, and feeling in taste immediately after preparation and after storage. The results are shown in Tables 5-1 and 5-2.

### (Evaluation Criteria)

| Light feeling in the mouth: | |
|---|---|
| - | especially weak |
| ± | slightly positive |
| + | strong |
| ++ | especially strong |

| Feelings in taste: | |
|---|---|
| X | bad taste |
| Δ | normal |
| O | slightly good taste |
| ⊚ | relatively good taste |

**Table 5-1**

| | Cool feeling substance | Light feeling in the mouth | |
|---|---|---|---|
| | | Immediately after preparation | After storage |
| Example 2-(1) | 3-1-Menthoxypropane-1,2-diol | ++ | ++ |
| Example 2-(2) | 3-1-Menthoxy-2-methylpropane -1,2-diol | ++ | ++ |
| Example 2-(3) | 2-1-Menthoxyetane-l-ol | ++ | ++ |
| Example 2-(4) | p-Menthane-3,8-diol | + | + |
| Comparative Example 5 | - | ± | ± |
| Comparative Example 6 | Menthyl lactate | ++ | ± |

**Table 5-2**

| | Cool feeling substance | Feeling in taste | |
|---|---|---|---|
| | | Immediately after preparation | After storage |
| Example 2-(1) | 3-1-Menthoxypropane-1,2-diol | ⊚ | ⊚ |
| Example 2-(2) | 3-1-Menthoxy-2-methylpropane-1,2-diol | ⊚ | ⊚ |
| Example 2-(3) | 2-1-Menthoxyetane-1-ol | ⊚ | ⊚ |
| Example 2-(4) | p-Menthane-3,8-diol | ○ | ○ |
| Comparative Example 5 | - | Δ | Δ |
| Comparative Example 6 | Menthyl lactate | ⊚ | Δ |

Table 5 shows that the beverages of Examples 2-(1) to 2-(4), to which the cool feeling substance of the present invention was added, have a good light feeling and also a good taste even if the evaluation was performed immediately after preparation and after storage for 20 days. On the other hand, the beverage of Comparative Example 5, to which the cool feeling substance was not added, has a weak light feeling and an inferior feeling in taste as well. The beverage of Comparative Example 6, in which the cool feeling substance and menthyl lactate (ester compound) were used, has a good light feeling immediately after production and good taste, however it has a weak light feeling and an inferior feeling in taste after storage for 20 days. The cause of this result is thought to be that on account of menthyl lactate being an ester compound, the menthyl lactate is partially decomposed by an acid (in this case, citric acid) in the solution into menthol and lactic acid to be deteriorated.

### Example 3 (Apple Juice Beverage)

Formulation components in accordance with the formulation in Table 6 below were blended and dissolved, and then the resultant material was heat-sterilized at 90°C. Thereafter, the material was filled into a can and then cooled to prepare 1000 parts by mass of an apple juice beverage. The fruit juice beverage thus obtained has a light feeling without heavy sweetness in both the taste at drinking and the aftertaste after drinking.

**Table 6**

| Formulation | Parts by mass |
|---|---|
| Sugar | 157.0 |
| Maltooligosaccharide | 30.0 |
| Xylose | 30.0 |
| Maltose | 130.0 |
| Sorbitol | 30.0 |
| Stevia | 0.2 |
| Apple juice concentrated by a factor of 5 | 100.0 |
| Vitamin C | 1.6 |
| Apple-like fruit flavor | 4.0 |
| Menthol | 0.0005 |
| 3-1-Menthoxy-1,2-propanediol | 0.00015 |
| Purified water | Balance |
| Total | 1000 |

### Example 4 (Carbonated Drink)

To formulation components of Table 7 below was added 60 parts by mass of purified water and.then the resultant material was blended and dissolved to prepare peach juice syrup. To 6 parts by mass of this syrup was added 4 parts by mass of carbonated water to prepare a carbonated drink. Thus obtained carbonated drink has a light feeling without heavy sweetness in both the taste at drinking and the aftertaste after drinking.

**Table 7**

| Formulation | Parts by mass |
|---|---|
| Maltitol syrup | 8.0 |
| Aspartame | 0.01 |
| Polydextrose syrup | 6.3 |
| Peach juice concentrated by a factor of 5 | 0.7 |
| Citric acid (crystal) | 0.1 |
| Peach-like fruit flavor | 0.2 |
| Menthol | 0.0002 |
| 2-1-Menthoxyethane-1-ol | 0.00005 |

### Example 5 (Carbonated Drink)

To formulation components in accordance with the formulation of Table 8 below was added carbonated water to make the total amount to 200 parts by mass to prepare a carbonated drink. Thus obtained carbonated drink has light feeling without heavy sweetness in both the taste at drinking and the aftertaste after drinking.

**Table 8**

| Formulation | Parts by mass |
|---|---|
| Sugar | 15.0 |
| Fructose, glucose and liquid sugar (75%) | 5.0 |
| Honey | 5.0 |
| Citric acid (crystal) | 0.3 |
| Lemon juice | 0.1 |
| Citrus-like fruit flavor | 0.2 |
| Menthol | 0.0003 |
| 3-1-Menthoxy-1,2-propanediol | 0.0001 |
| Vanillylbutyl ether | 0.00001 |
| Carbonated water | Balance |
| Total | 200 |

### Example 6 (Sports Drink)

In accordance with the formulation of Table 9 below, each of the components was blended and dissolved to prepare 200 parts by mass of a sports drink. Thus obtained sports drink has a light feeling without heavy sweetness in both the taste at drinking and the aftertaste after drinking.

**Table 9**

| Formulation | Parts by mass |
|---|---|
| Sugar | 8.0 |
| Fructose, glucose and liquid sugar (75%) | 5.0 |
| Citric acid (crystal) | 0.25 |
| Vitamin C | 0.2 |
| Straight grape fruit juice | 2.0 |
| Grape fruit-like fruit flavor | 0.15 |
| Menthol | 0.0001 |
| 3-1-Menthoxy-1,2-propanediol | 0.00003 |
| Emulsified formulation | 0.1 |
| Purified water | Balance |
| Total | 200 |

### Example 7 (Near Water)

In accordance with the formulation of Table 10 below, the formulation components were blended and dissolved to prepare 200 parts by mass of near water. Thus obtained near water has a light feelings without heavy sweetness in both the taste at drinking and the aftertaste after drinking.

**Table 10**

| Formulation | Parts by mass |
|---|---|
| Sugar | 8.0 |
| Liquid sugar containing fructose and | 5.0 |
| glucose (75%) | |
| Transparent straight lemon juice | 2.2 |
| Vitamin C | 0.1 |
| Whey mineral | 1.0 |
| Citrus-like fruit flavor | 0.1 |
| Menthol | 0.0002 |
| 3-1-Menthoxy-1,2-propanediol | 0.00005 |
| Purified water | Balance |
| Total | 200 |

### Example 8 (Near Water)

To formulation components of Table 11 below was added purified water and each of the components was dissolved to prepare 1000 parts by mass of near water. Thus obtained near water has a light feeling without heavy sweetness in both the taste at drinking and the aftertaste after drinking.

**Table 11**

| Formulation | Parts by mass |
|---|---|
| Sugar | 53.0 |
| Orange juice concentrated by a factor of 5 | 2.0 |
| Citric acid | 0.2 |
| Vitamin C | 0.25 |
| Orange-like fruit flavor | 1.0 |
| Menthol | 0.0005 |
| 2-1-Menthoxyethane-1-ol | 0.0001 |
| Vanillylbutyl ether | 0.00002 |
| Purified water | Balance |
| Total | 200 |

### Example 9 (distilled spirit highball)

In accordance with the formulation of Table 12 below, to the formulation components was added purified water to prepare 300 parts by mass of a liqueur. To 6 parts by mass of the liqueur of this formulation was added 4 parts by mass of carbonated water to prepare distilled spirit (SHOCHU) highball. Thus obtained carbonated drink has a light feeling without heavy sweetness in both the taste at drinking and the aftertaste after drinking.

**Table 12**

| Formulation | Parts by mass |
|---|---|
| Xylitol | 28.0 |
| Transparent grape juice concentrated | 6.0 |
| by a factor of 5 | |
| 60% Ethanol | 85.0 |
| Citric acid | 1.7 |
| Grape-like fruit flavor | 1.0 |
| Menthol | 0.0005 |
| 3-1-Menthoxy-1,2-propanediol | 0.0001 |
| Purified water | Balance |
| Total | 200 |

## Claims

1. Use of components (a) and (b) in a fruit juice-containing beverage wherein no heavy sweetness remains both at taking and after taking a light feeling is continuously given even though stored under warming condition for a long time , comprising, in addition to a fruit component and a base having sweetness, components (a) and (b):
(a) one or more refreshing feeling substances selected from the group consisting of menthol, menthone, camphor, pulegol, isopulegol, pulegone, cineol, mint oil, peppermint oil, spearmint oil, eucalyptus oil, and fractions thereof; and
(b) one or more cool feeling substances selected from the group consisting of 3-1-menthoxypropane-1, 2-diol, N-ethyl-p-menthane-3-carboxamide, 3-1-menthoxy-2-methylpropane-1, 2-diol, p-menthane-3,8-diol, 2-I-menthoxyethane-1-ol, 3-I-menthoxypropane-1-ol and 4-I-menthoxybutane-1-ol.

2. Use according to claim 1 wherein the fruit component is a straight fruit juice or a concentrated fruit juice or blends of two or more fruit juice components.

3. Use according to claim 1, wherein the base having sweetness comprises one or more kinds selected from the group consisting of sorbitol, glycerin, propylene glycol, saccharin sodium salt, aspartame, xylose, maltose, glucose, sucrose, maltitol, maltooligosaccharide, erythritol, xylitol, sucrarose, acesulfam K, glycyrrhizin, glycyrrhizin dipotassium, stevia, fructooligo-saccharide, honey, and a licorice extract.

4. Use according to claim 1, wherein the total amount of addition of a refreshing feeling substance and a cool feeling substance is from 0.00005 to 0.05% by mass based on the amount of fruit juice-containing beverage.

5. Use according to claim 1, wherein, in the mass ratio of a refreshing feeling substance to a cool feeling substance, the cool feeling substance is from 0.01 to 100 parts by mass based on 1 part by mass of the refreshing feeling substance.

6. Use according to claim 2, wherein the straight fruit juice or the concentrated fruit juice is a juice of citrus fruits, apples, peaches, grapes, blue berries, raspberries, strawberries, melons, Japanese apricots, cassis, and marumelos.

7. Use according to claim 1, wherein the fruit juice-containing beverage is a fruit beverage, and the fruit beverage is a fruit juice beverage, a carbonated beverage, soft drinks, sports drinks, near water, an alcohol beverage, health and nutrient drinks, dietary supplements, a fruit wine, or stimulant and energy beverages including coffee, tea, and cocoa.

8. Use according to claim 1, wherein the fruit juice-containing beverage is a dairy drink.

9. Use according to any one of claims 1 to 6, wherein the fruit juice-containing beverage comprises one or more additional flavor improving substances selected from the group consisting of a vanillyl alkyl ether derivative (alkyl group having 1 to 6 carbons), 4-(I-menthoxy-methyl)-2-(3',4'-dihydroxyphenyl)-1,3- dioxolane, 4-(I-menthoxy-methyl)-2-(3'-methoxy-4'-hydroxyphenyl)-1,3 -dioxolane; 4-(I-menthoxy-methyl)2-(3'-ethoxy-4'-hydroxyphenyl)-1,3-dioxolane, an alkanoic acid vanillamide (alkyl group having 7 to 12 carbons), a vanillin or ethyl vanillin alkylene glycol acetal (alkylene group having 3 to 6 carbons), ginger oleoresin, capsicum oleoresin, pepper oleoresin, zingerone, piperdine, dihydrocapsaicin, capsaicin, jambu oleoresin, spilanthol, sanshool, sanshoamide, piper nigrum, zanthoxylum piperitum, chavicine, piperine, and a morphologically processed form thereof.

## Patentansprüche

1. Verwendung von Komponenten (a) and (b) in einem fruchtsafthaltigen Getränk wobei keine schwere Süsse sowohl bei Einnahme als auch nach Einnahme verbleibt und kontinuierlich ein leichtes Gefühl erzeugt wird, auch wenn es lange unter warmen Bedingungen gehalten wird, das zusätzlich zur Fruchtkomponente und einer süssen Basis Komponenten (a) und (b) aufweisen:
(a) eine oder mehr erfrischende Substanzen ausgewählt aus der Gruppe bestehend aus Menthol, Menthon, Kampfer, Pulegol, Isopulegol, Pulegon, Cineol, Minzöl, Pfefferminzöl, grünes Minzöl, Eukalyptusöl, und Fraktionen derselben; und
(b) eine oder mehr kühlende Substanzen ausgewählt aus der Gruppe bestehend aus 3-I-Menthoxypropan-1, 2-diol, N-Ethyl-p-menthan-3-carboxamid, 3-1-Menthoxy-2-methylpropan-1, 2-diol, p-Menthan-3, 8-diol, 2-1-Menthoxyethan-1-ol, 3-I-Menthoxypropan-1-ol und 4-I-Menthoxybutan-1-ol.

2. Verwendung nach Anspruch 1, wobei die Fruchtkomponente reiner Fruchtsaft oder Fruchtsaftkonzentrat oder Mischungen von zwei oder mehr Fruchtsaftkomponenten ist.

3. Verwendung nach Anspruch 1, wobei die süsse Basis eine oder mehrere Substanzen ausgewählt aus der Gruppe bestehend aus Sorbitol, Glycerin, Propylenglykol, Natriumsalz des Saccharins, Aspartam, Xylose, Maltose, Glucose, Sucrose, Maltitol, Maltooligosaccharide, Erythritol, Xylitol, Sucralose, Acesulfam K, Glycyrrhizin, Dinatrium-Glycyrrhizin, Stevia, Fructooligo-Saccharide, Honig und Süssholzextrakt, aufweist.

4. Verwendung nach Anspruch 1, wobei die Gesamtmenge zugesetzter, erfrischender Substanz und kühlender Substanz zwischen 0.00005 bis 0.05 Masse %, berechnet auf Basis der Menge fruchtsafthaltigen Getränks, beträgt.

5. Verwendung nach Anspruch 1, wobei, im Massenverhältnis erfrischende Substanz zu kühlender Substanz, die kühlende Substanz zu 0.01 bis 100 Masseteilen pro 1 Masseteil der erfrischenden Substanz vorliegt.

6. Verwendung nach Anspruch 2, wobei der reine Fruchtsaft oder der konzentrierte Fruchtsaft ein Saft von Zitrusfrüchten, Äpfeln, Pfirsichen, Trauben, Blaubeeren, Himbeeren, Erdbeeren, Melonen, Japanischen Aprikosen, Johannisbeeren und Marumelos ist.

7. Verwendung nach Anspruch 1, wobei das fruchtsafthaltige Getränk ein Fruchtgetränk ist und das Fruchtgetränk ein Fruchtsaftgetränk, ein mit Kohlensäure versetztes Getränk, Softdrink, Sport-Getränk, Near Water, ein alkoholisches, Gesundheits- und Ernährungsgetränk, Diätetisches Ergänzungsmittel, ein Fruchtwein, stimulierendes und energetisierendes Getränk, eingeschlossen Kaffee, Tee und Kakao, ist.

8. Verwendung nach Anspruch 1, wobei das fruchtsafthaltige Getränk ein Molkereiprodukt-Getränk ist.

9. Verwendung nach irgendeinem der Ansprüche 1 bis 6, wobei das Fruchtsaft-haltige Getränk ein oder mehrere zusätzliche geschmacksverbessernde Substanzen, ausgewählt aus der Gruppe bestehend aus Vanillylalkyletherabkömmlingen (Alkylgruppen mit 1 bis 6 Kohlenstoffatomen), 4-(I-Menthoxymethyl)-2-(3',4'-dihydroxyphenyl)-1, 3- dioxolan, 4-(I-menthoxy-methyl)-2-(3'-methoxy-4'-hydroxyphenyl)-1,3 - dioxolan; 4-(I-Menthoxy-methyl)-2-(3'-ethoxy-4'-hydroxyphenyl)-1,3-dioxolan, ein Vanillamid der aliphatischen Carbonsäuren (Alkylgruppe mit 7 bis 12 Kohlenstoffatomen), ein Vanillin oder Ethylvanillin-Alkylenglycolacetal (Alkylengruppe mit 3 bis 6 Kohlenstoffatomen), Ingweroleoresin, Capsicum oleoresin, Pfefferoleoresin, Zingeron, Piperidin, Dihydrocapsaicin, Capsaicin, Jambu oleoresin, Spilanthol, Sanshool, Sanshoamid, schwarzer Pfeffer, Zanthoxylum piperitum, Chavicin, Piperin und eine morphologisch bearbeitete Form derselben, aufweist.

## Revendications

1. Utilisation de constituants (a) et (b) dans une boisson contenant jus de fruits où pas de douceur lourde ne reste tant à qu'après avoir pris une sensation légère n'est continuellement donnée même si stockée dans des conditions de réchauffement pour un long temps, comprenant, en addition à un constituant de fruit et une base ayant de douceur, les constituants (a) et (b):
(a) une ou plusieurs substances pour la sensation de fraîcheur sélectées du groupe formé de menthol, menthone, camphre, pulégol, isopulégol, pulégone, cinéole, huile de menthe, huile de menthe poivrée, huile de menthe verte, huile d'eucalyptus, et fractions de ceux-ci; et
(b) une ou plusieurs substances pour la sensation de frais sélectées du groupe formé de 3-I-menthoxypropane-1,2-diol, N-ethyle-p-menthane-3-carboxamide, 3-I-menthoxy-2-methylpropane-1,2-diol, p-menthane-3,8-diol, 2-I-menthoxyethane-1-ol, 3-I-menthoxypropane-1-ol et 4-I-menthoxybutane-1-ol.

2. Utilisation selon la revendication 1 où le constituant de fruit est un jus de fruits simple ou un jus de fruits concentré ou mélanges de deux ou plusieurs constituants de jus de fruits.

3. Utilisation selon la revendication 1, où la base ayant la douceur comprend un ou plusieurs types sélectés du groupe formé de sorbitol, glycérine, propylène glycol, saccharine sodique, aspartame, xylose, maltose, glucose, saccharose, maltitol, malto-oligosaccharide, erythritol, xylitol, acésulfame K, glycyrrhizine, dipotassium de glycyrrhizine, stévia, fructooligo-saccharide, miel, et un extrait de réglisse.

4. Utilisation selon la revendication 1, où la quantité totale d'addition d'une substance pour la sensation de fraîcheur et d'une substance pour la sensation de frais est de 0,00005 à 0,05 % de la masse basée sur la quantité de boisson contenant le jus de fruits.

5. Utilisation selon la revendication 1, où, dans le rapport des masses d'une substance pour la sensation de fraîcheur à une substance pour la sensation de frais, la substance pour la sensation de frais est de 0,01 à 100 parties de la masse basée sur 1 partie de la masse de la substance pour la sensation de fraîcheur.

6. Utilisation selon la revendication 2, où le jus de fruits simple ou le jus de fruits concentré est un jus d'agrumes, pommes, pêches, raisins, myrtilles, framboises, caproniers, melons, abricots japonais, cassis, et marumelos.

7. Utilisation selon la revendication 1, où la boisson contenant le jus de fruits est une boisson de fruits, et la boisson de fruits est une boisson de jus de fruits, une boisson gazeuse, des boissons non alcoolisées, des boissons pour sportifs, près de l'eau, un boisson alcoolisée, des boissons pour santé et nutritives, des suppléments alimentaires, un vin de fruits, ou des boissons stimulantes et énergisantes incluant le café, le thé et le cacao.

8. Utilisation selon la revendication 1, où la boisson contenant le jus de fruits est une boisson contenant du lait.

9. Utilisation selon l'une quelconque des revendications 1 à 6, où la boisson contenant le jus de fruits comprend une ou plusieurs substances additionnelles d'amélioration du goût sélectées du groupe formé d'un dérivé vanillyle alkyle éther (le groupement alkyle ayant 1 à 6 carbones), 4-(I-methoxy-méthyle)-2-(3',4'-dihydroxyphényle)-1,3-dioxolane; 4-(I-menthoxy-méthyle)-2-(3'-méthoxy-4'-hydroxyphényle)-1,3-dioxolane; 4-(I-menthoxy-méthyle)-2-(3'-éthoxy-4'-hydroxyphényle)-1,3-dioxolane, une vanillamide d'acide alcanoïque, (le groupement alkyle ayant 7 à 12 carbones), une vanilline ou éthyle vanilline alkylène glycol acétal (le groupement alkylène ayant 3 à 6 carbones), oléorésine de gingembre, oléorésine de capsicum, oléorésine de poivre, zingérone,
pipéridine, dihydrocapsaïcine, capsaïcine, oléorésine de jambu, spilanthol, sanshool, sanshoamide, poivre noir, zanthoxylum piperitum, chavicine, pipérine, et une forme morphologiquement traitée de ceux-ci.
